# DEMANDE DE BREVET EUROPEEN

(11) **EP 0 881 728 A1**
(43) Date de publication de la demande: **02.12.1998**
(21) Numéro de dépôt: 98401035.5
(22) Date de dépôt: 28.04.1998
(51) Int. Cl.: H02B 1/26, H01F 27/04, H01F 27/02

(54) **Dispositif d'alimentation électrique notamment pour un réseau d'éclairage public.**

(30) Priorité: 02.05.1997 FR 9705462
(71) Demandeur: SAT (Société Anonyme de Télécommunications), 75116 Paris (FR)
(72) Inventeur: Reignier, Philippe, 75013 Paris (FR); Grossoleil, Thierry, 75013 Paris (FR)
(74) Mandataire: Fruchard, Guy

(57) **Abrégé**

Le dispositif d'alimentation électrique comporte un transformateur (1) disposé dans un boîtier (2), au moins une série de bornes haute tension (7) reliées au transformateur et adaptées à recevoir des connecteurs embrochables (11) associés à des câbles de haute tension (12), les bornes haute tension (7) étant disposées dans un logement (4) comportant un capot amovible (22) pourvu de moyens (24) adaptés à retenir les connecteurs (11) dans une position embrochée lorsque le capot (22) est mis en place sur le boîtier (2).

## Description

La présente invention concerne un dispositif d'alimentation électrique, notamment pour un réseau d'alimentation d'éclairage public.

On connaît des dispositifs d'alimentation électrique comportant un transformateur disposé dans un boîtier, une série de bornes haute tension reliées au transformateur par des fils de liaison et adaptées à recevoir des connecteurs embrochables ou enfilables associés à des câbles haute tension, et un câble de sortie basse tension. Dans les dispositifs d'alimentation électrique existants les câbles haute tension sont généralement fixés aux bornes haute tension par un dispositif de verrouillage individuel de sorte que pour la mise en place ou le débranchement du dispositif d'alimentation il est nécessaire de procéder à une manipulation individuelle pour chaque câble haute tension.

Selon l'invention, on prévoit un dispositif d'alimentation du type précité dans lequel les bornes haute tension sont disposées dans un logement comportant un capot amovible pourvu de moyens adaptés à retenir les connecteurs dans une position embrochée lorsque le capot est mis en place sur le boîtier.

Ainsi par une seule opération de démontage du capot, on a accès à l'ensemble des connecteurs embrochables.

Selon une version avantageuse de l'invention, les câbles haute tension comportent des bagues de verrouillage et le capot comporte au moins un élément de paroi pourvu de fentes de retenue ayant une largeur inférieure aux bagues de verrouillage, cet élément de paroi étant disposé pour que les bords des fentes encadrent les câbles haute tension en étant adjacents aux bagues de verrouillage lorsque le capot est fixé sur le boîtier. Ainsi, une traction sur un câble haute tension met les bagues de verrouillage en appui sur l'élément de paroi du capot et empêche un débranchement des connecteurs haute tension.

Selon un aspect avantageux de l'invention, l'élément de paroi du capot comportant les fentes de retenue s'étend à l'intérieur du boîtier en étant adjacent à une paroi de celui-ci. Ainsi, on évite un fléchissement de l'élément de paroi comportant les fentes de retenue lors d'une traction sur les câbles haute tension même lorsque le capot est réalisé à partir d'une tôle de faible épaisseur.

Selon un autre aspect avantageux de l'invention, le boîtier comporte en regard des bornes haute tension des ouvertures ayant une largeur suffisante pour le passage des bagues de verrouillage. Ainsi, il est possible d'introduire les connecteurs embrochables dans le boîtier sans recourber les câbles haute tension.

Par ailleurs, lorsqu'un même réseau haute tension doit être relié à plusieurs transformateurs ou à d'autres éléments reliés en parallèle au réseau haute tension, il est généralement nécessaire de prévoir des boîtes de dérivation qui sont onéreuses et dont la mise en place est mal aisée.

Selon une caractéristique additionnelle de l'invention, le dispositif d'alimentation comporte deux séries de bornes haute tension reliées deux à deux et aux fils de liaison. Ainsi, la dérivation vers le transformateur est réalisée à l'intérieur du dispositif, de sorte que sa mise en oeuvre est particulièrement aisée.

D'autres caractéristiques et avantages de l'invention apparaîtront à la lecture de la description qui suit d'un mode de réalisation particulier non limitatif de l'invention en référence aux figures ci-jointes, parmi lesquelles :
- la figure 1 est une vue en perspective éclatée du dispositif d'alimentation selon l'invention ;
- la figure 2 est une vue en coupe partielle agrandie selon la ligne II-II de la figure 1.

En référence aux figures, le dispositif d'alimentation électrique selon l'invention comporte un transformateur 1 disposé dans un boîtier 2, ici un boîtier moulé en aluminium. A sa partie inférieure, le transformateur est équipé d'un câble de sortie basse tension 3.

A sa partie supérieure, le boîtier 2 délimite un logement 4 séparé en deux par un bloc de matière isolante 5, par exemple une résine moulée, délimitant une cavité centrale 6. Le bloc de résine 5 porte deux séries de bornes haute tension 7 disposées en regard les unes des autres et reliées deux à deux par des barrettes tubulaires rectilignes 8 qui s'étendent à l'intérieur du bloc 5. Les barrettes 8 sont reliées par les fils de liaison 10 aux bornes haute tension du transformateur 1, le nombre de barrettes reliées au transformateur étant fonction du nombre de phases du transformateur.

Les bornes haute tension 7 sont adaptées à recevoir des connecteurs embrochables généralement désignés en 11 associés à des câbles haute tension 12. Les connecteurs embrochables 11 ont une structure générale connue en soi et comportent en particulier un connecteur mâle 13 ayant une première extrémité présentant un alésage de réception d'un embout de connexion mâle 9 de l'âme conductrice 14 du câble 12 par exemple par sertissage, et une seconde extrémité ayant une forme correspondante à l'intérieur de la barrette, l'ensemble étant noyé dans le bloc de résine 5. La structure des connecteurs embrochables au niveau de leur raccordement avec les câbles 12 est conventionnelle et n'a pas été représentée en détail sur les figures.

Chaque connecteur embrochable 11 comporte une bague de verrouillage 16 qui dans l'exemple illustré est réalisée en une seule pièce avec la matière isolante du connecteur embrochable auquel elle est associée, et une lèvre annulaire élastique 17 entourant le câble 12 et sous laquelle est disposé un mastic d'étanchéité 36.

La paroi latérale du logement 4 comporte, en regard des bornes haute tension 7, des fentes 18 ayant une largeur suffisante pour le passage des connecteurs 11 et des bagues de verrouillage 16. A son extrémité supérieure, le boîtier comporte une plaque 19 s'étendant à l'aplomb du bloc de résine 5 et percée d'une ouverture 20 comportant un rebord en saillie 21.

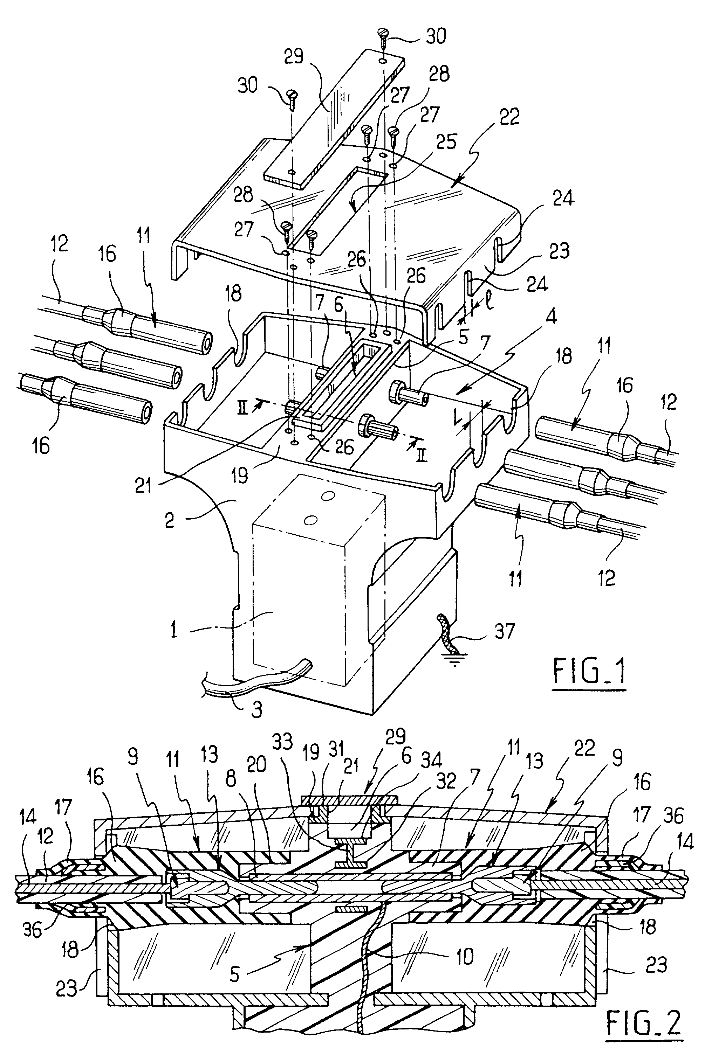

Par ailleurs, le dispositif selon l'invention comporte un capot en tôle métallique 22 ayant généralement la forme de l'ouverture supérieure du logement 4 et replié à ses extrémités pour former des éléments de paroi verticaux 23 pourvus de fentes de retenue 24 ayant une largeur inférieure à celle des bagues de retenue 16 et disposées dans la paroi pour venir en coïncidence avec les fentes 18 du logement 4 lorsque le capot est mis en place sur le boîtier 2. Dans sa partie centrale le capot 22 comporte une ouverture 25 destinée à s'emboîter autour du rebord 21 de l'ouverture 20. La plaque 19 comporte des perçages 26 et le capot comporte des perçages 27 à l'aplomb des perçages 26 pour permettre le passage de vis de fixation 28 destinées à fixer le capot 22 sur la plaque 19 du boîtier 2. Un couvercle 29 est prévu pour recouvrir l'ouverture 25 et les vis de fixation 28 de façon que celles-ci ne soient accessibles qu'après retrait du couvercle 29. Le couvercle 29 est fixé au boîtier 2 par des vis 30 passant à travers des perçages appropriés dans le couvercle 29 et le capot 22. En position montée, le couvercle 29 prend appui sur le rebord 21 de l'ouverture 20 par l'intermédiaire d'un joint d'étanchéité 31 (voir figure 2).

A l'intérieur du bloc de résine 5 le dispositif selon l'invention comporte des détecteurs de tension capacitifs comprenant de préférence un tronçon de tube 32 disposé autour d'une barrette 8 et relié par une tige 33 à un plot de contact 34. Dans le mode de réalisation préféré illustré, le transformateur 1, les fils de liaison 10 et les détecteurs de tension sont noyés dans la même masse de résine que celle formant le bloc 5 et les plots de contact 34 des détecteurs de tension débouchant dans le fond de la cavité 6.

Lors de l'installation, le capot 22 étant retiré, les connecteurs 11 sont engagés dans les fentes 18 du logement 4 et sont embrochés sur les bornes haute tension 7. Ils comportent de préférence une jupe élastique 20 assurant un montage étanche sur la borne haute tension 7.

On remarquera que les fentes 18 évitent de courber les câbles haute tension lors de leur mise en place. Lorsque tous les connecteurs haute tension ont été embrochés, le capot 22 est mis en place en engageant les éléments de parois 23 du capot 22, les bords des fentes 24 du capot 22 venant encadrer les câbles haute tension 12 en étant adjacents aux bagues de verrouillage 16. Les vis de fixation 28 du capot 22 sont mises en place puis recouvertes par le couvercle 29 qui est à son tour fixé par les vis 30. On notera à ce propos que les vis de fixation peuvent comporter une tête spéciale les rendant inviolables par les outils habituellement accessibles au public. On peut également verrouiller le capot au moyen d'une serrure à clé pouvant être ouverte seulement avec la clé nécessaire pour mettre le poste source en tension. On est ainsi assuré que le capot ne peut être déverrouillé qu'après avoir mis le poste source hors tension.

Lorsqu'une intervention est nécessaire sur le dispositif d'alimentation de l'invention, il est nécessaire pour un opérateur de retirer le couvercle 29 pour avoir accès aux vis de fixation 28 du capot 22, son attention est alors attirée sur la nécessité de procéder à une vérification de la mise hors tension du réseau en utilisant les détecteurs capacitifs accessibles par les ouvertures 25 et 20.

Par ailleurs le capot 22, comme le boîtier 2, est mis à la terre par une tresse métallique 37 de sorte que si un outil métallique traverse accidentellement le capot 22 et vient en contact d'un des conducteurs haute tension le courant est automatiquement évacué dans le sol. Ceci permet de supprimer le blindage mis à la terre qui est habituellement nécessaire autour des connecteurs 11.

Bien entendu, l'invention n'est pas limitée au mode de réalisation décrit et on peut y apporter des variantes de réalisation sans sortir du cadre de l'invention tel que défini par les revendications.

En particulier, bien que le dispositif selon l'invention ait été illustré selon un mode de réalisation comportant deux séries de bornes haute tension, on peut le réaliser avec une seule série de bornes haute tension, la liaison avec d'autres éléments du réseau haute tension étant alors assurée de façon conventionnelle par des boîtes de dérivation. On peut également prévoir des séries de bornes haute tension disposées côte à côte.

De même, bien que les fentes 18 du boîtier 2 aient été illustrées selon un mode de réalisation où elles débouchent sur le bord supérieur du logement 4, on peut prévoir de réaliser dans la paroi du boîtier des ouvertures ne débouchant pas sur le bord supérieur du celui-ci ou au contraire une découpe unique dans la paroi latérale du boîtier.

En outre, bien que l'invention ait été illustrée avec des bagues de verrouillage 16 réalisées en une seule pièce avec la partie isolante des connecteurs embrochables 11, on peut prévoir de disposer des bagues de verrouillage 16 séparées des connecteurs 11 en particulier lorsque les dimensions du logement 4 sont importantes par rapport à la dimension des connecteurs 11.

Enfin, bien que les éléments de paroi 23 du capot 22 comportant les fentes de retenue 24 aient été illustrés par un mode de réalisation où ils sont disposés aux extrémités du capot 22, on peut prévoir des éléments de parois fixés dans une position intermédiaire pour s'étendre à l'intérieur du logement 4 dans une position coïncidant avec la position des bagues de verrouillage 16.

Dans le cas d'un capot en matière isolante, on fixera de préférence à celui-ci une tôle métallique reliée à la terre pour obtenir le même effet de protection des tiers qu'avec un capot métallique.

## Revendications

1. Dispositif d'alimentation électrique comportant un transformateur (1) disposé dans un boîtier (2), au moins une série de bornes haute tension (7) reliées au transformateur par des fils de liaison (10) et adaptées à recevoir des connecteurs embrochables (11) associés à des câbles haute tension (12), et un câble de sortie basse tension (3), caractérisé en ce que les bornes haute tension (7) sont disposées dans un logement (4) comportant un capot amovible (22) pourvu de moyens (24) adaptés à retenir les connecteurs (11) dans une position embrochée lorsque le capot (22) est mis en place sur le boîtier (2).

2. Dispositif selon la revendication 1, caractérisé en ce que les câbles haute tension (12) comportent des bagues de verrouillage (16) et en ce que le capot (22) comporte au moins un élément de paroi (23) pourvu de fentes de retenue (24) ayant une largeur inférieure aux bagues de verrouillage (16), cet élément de paroi (23) étant disposé pour que les bords des fentes (24) encadrent les câbles haute tension en étant adjacents aux bagues de verrouillage (16) lorsque le capot (22) est fixé sur le boîtier (2).

3. Dispositif selon la revendication 1 ou la revendication 2, caractérisé en ce que le capot (22) comprend une tôle métallique reliée à la terre.

4. Dispositif selon la revendication 2 ou la revendication 3, caractérisé en ce qu'en regard des bornes haute tension (7) le boîtier (2) comporte des ouvertures (18) ayant une largeur suffisante pour le passage des bagues de verrouillage (16).

5. Dispositif selon l'une des revendications 1 à 4, caractérisé en ce qu'il comporte des détecteurs de tension capacitifs (32) associés aux câbles haute tension (12) et disposés dans une cavité (6) accessible à travers une ouverture (25) du capot, et en ce que la cavité (6) est fermée par un couvercle (29) couvrant des moyens de fixation (28) du capot sur le boîtier.

6. Dispositif selon la revendication 5, caractérisé en ce que le transformateur (1), les fils de liaison (10) et les détecteurs de tension (32) sont noyés dans une résine (35), les détecteurs comportant des plots de contact (34) débouchant de la résine à l'intérieur de la cavité (6).

7. Dispositif selon l'une des revendications 1 à 6, caractérisé en ce qu'il comporte deux séries de bornes haute tension (7) reliées deux à deux et aux fils de liaison du transformateur.

8. Dispositif selon la revendication 7, caractérisé en ce que les deux séries de bornes haute tension (7) sont disposées en regard l'une de l'autre et sont reliées par des barrettes rectilignes (8).

9. Dispositif selon l'une des revendications 1 à 8, caractérisé en ce que les connecteurs embrochables (11) sont montés de façon étanche sur les bornes haute tension (7).

10. Dispositif selon la revendication 9, caractérisé en ce que les connecteurs embrochables (11) comportent une lèvre élastique (17) à une extrémité chevauchant un câble haute tension et en ce qu'un mastic d'étanchéité (36) est disposé à l'intérieur de la lèvre (17).
